(19)

**Europäisches Patentamt**
**European Patent Office**
**Office européen des brevets**

(11) **EP 3 685 968 B1**

(12) **EUROPEAN PATENT SPECIFICATION**

(45) Date of publication and mention
of the grant of the patent:
**14.05.2025 Bulletin 2025/20**

(21) Application number: **19153052.6**

(22) Date of filing: **22.01.2019**

(51) International Patent Classification (IPC):
**B25J 9/16** (2006.01)   **G06Q 10/04** (2023.01)

(52) Cooperative Patent Classification (CPC):
**B25J 9/1664; G06N 10/60; G06Q 10/047;**
G05B 2219/34418; G05B 2219/40446

(54) **ROBOT MOTION PLANNING IN MANUFACTURING**

ROBOTERBEWEGUNGSPLANUNG BEI DER HERSTELLUNG

PLANIFICATION DE MOUVEMENTS DE ROBOT DANS LA FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.07.2020 Bulletin 2020/31**

(73) Proprietor: **Bayerische Motoren Werke
Aktiengesellschaft
80809 München (DE)**

(72) Inventors:
• **Mehta, Arpit**
  80339 München (DE)
• **Müller, Markus**
  80335 München (DE)
• **Woldetsadick, Selam Getachew**
  81541 München (DE)
• **Benesch, Stefan**
  80807 München (DE)
• **Pflugfelder, Bernhard**
  80638 München (DE)
• **Wick, Oliver**
  85411 Hohenkammer (DE)
• **Tan, Khanh-Huy**
  80939 München (DE)
• **Muradi, Murad**
  80807 München (DE)
• **Schinkel, Fritz, Dr.**
  80807 München (DE)

(56) References cited:
• **VICENCIO KEVIN ET AL: "Multi-goal path
  planning based on the generalized Traveling
  Salesman Problem with neighborhoods", 2014
  IEEE/RSJ INTERNATIONAL CONFERENCE ON
  INTELLIGENT ROBOTS AND SYSTEMS, IEEE, 14
  September 2014 (2014-09-14), pages 2985 - 2990,
  XP032676456, DOI: 10.1109/IROS.2014.6942974**
• **ROMAN MARTONAK ET AL: "Quantum
  annealing of the Traveling Salesman Problem",
  ARXIV.ORG, CORNELL UNIVERSITY LIBRARY,
  201 OLIN LIBRARY CORNELL UNIVERSITY
  ITHACA, NY 14853, 12 February 2004
  (2004-02-12), XP080142600, DOI: 10.1103/
  PHYSREVE.70.057701**
• **GILBERT LAPORTE: "The traveling salesman
  problem: An overview of exact and approximate
  algorithms", EUROPEAN JOURNAL OF
  OPERATIONAL RESEARCH, vol. 59, no. 2, 1 June
  1992 (1992-06-01), AMSTERDAM, NL, pages 231 -
  247, XP055606455, ISSN: 0377-2217, DOI:
  10.1016/0377-2217(92)90138-Y**
• **GUOQING WANG ET AL: "Robot Path Planning
  Based On The Travelling Salesman Problem", 1
  January 2015 (2015-01-01), XP055605741,
  Retrieved from the Internet <URL:https://www.
  aidic.it/cet/15/46/052.pdf> DOI: 10.3303/
  CET1546052**
• **STASTNY JIRI ET AL: "Traveling Salesman
  Problem optimization by means of graph-based
  algorithm", 2016 39TH INTERNATIONAL
  CONFERENCE ON TELECOMMUNICATIONS
  AND SIGNAL PROCESSING (TSP), IEEE, 27 June
  2016 (2016-06-27), pages 207 - 210,
  XP033014709, DOI: 10.1109/TSP.2016.7760861**

- **MUHAMMAD USMAN ARIF ET AL: "An Evolutionary Traveling Salesman Approach for Multi-Robot Task Allocation :", PROCEEDINGS OF THE 9TH INTERNATIONAL CONFERENCE ON AGENTS AND ARTIFICIAL INTELLIGENCE, 24 February 2017 (2017-02-24), pages 567 - 574, XP055606551, ISBN: 978-989-7582-20-2, DOI: 10.5220/0006197305670574**
- **ALATARTSEV SERGEY ET AL: "Robotic Task Sequencing Problem: A Survey", JOURNAL OF INTELLIGENT AND ROBOTIC SYSTEMS, KLUWER DORDRECHT, NL, vol. 80, no. 2, 26 March 2015 (2015-03-26), pages 279 - 298, XP035552744, ISSN: 0921-0296, [retrieved on 20150326], DOI: 10.1007/S10846-015-0190-6**
- **BISWAS RUPAK ET AL: "A NASA perspective on quantum computing: Opportunities and challenges", PARALLEL COMPUTING, vol. 64, 27 November 2016 (2016-11-27), pages 81 - 98, XP085041297, ISSN: 0167-8191, DOI: 10.1016/ J.PARCO.2016.11.002**

## Description

### Technical Field

The present disclosure relates to systems and methods for robot motion planning, in particular for use in manufacturing. In particular, the present disclosure relates to systems and methods for robot motion planning using optimization based on quantum annealing.

### Background Art

Recently, considerable attention has been paid to planning and scheduling problems for multiple robot systems (MRS). Such attention has resulted in a wide range of techniques being developed in solving more complex tasks at ever increasing speeds. At the same time, however, the complexity of such tasks has increased as such systems have to cope with ever increasing business requirements, rendering the above-mentioned techniques unreliable, if not obsolete.

A central issue one must contend with when developing techniques for solving optimization problems, such as those arising from MRS, is the simple fact that classical computing cannot indefinitely improve according to Moore's Law, and there is some concern that deviation from such a trajectory has already begun. Quantum computing is an alternative form of computation that holds a lot of potential for providing some advantages over classical computing for solving certain kinds of difficult optimization problems in the coming years.

Motivated by this fact, systems and methods according to the present disclosure demonstrate the feasibility of running a particular type of optimization problem on existing quantum computing technology. The optimization problem investigated arises when considering how to optimize a robotic assembly line, which is one of the keys to success in the manufacturing domain. A small improvement in the efficiency of such an MRS can lead to considerable advantages in terms of time of manufacturing, capacity, robot life, and material usage.

The nature of the quantum processor used according to the present disclosure imposes the constraint that the optimization problem be cast as a quadratic unconstrained binary optimization (QUBO) problem. For the specific problem investigated, this allows situations with one robot to be modeled naturally. The results show that for simple single-robot tasks, the optimization problem can be straightforwardly solved within a feasible time span on existing quantum computing hardware. It is emphasized that one goal of the present disclosure is to show the feasibility of running a particular kind of optimization problem on a quantum annealer.

Therefore, there is a need for systems and methods that allow for optimization of robot motion planning that entail a computational advantage over conventional systems or methods.

Vicencio Kevin et al. (2014 IEEE/RSJ International Conference on Intelligent Robots and Systems (IROS 2014), 14-18 September 2014, pages 2985-2990) proposes an approach to a problem in which the TSPN is extended into a Generalized Traveling Salesman Problem with Neighborhoods (GTSPN) where each node can be located in multiple regions, called neighborhoodsets. A heuristic procedure is proposed to find a near-optimal tour for GTSPN instances using a genetic algorithm approach.

Roman Martonak et al. (ARXIV.ORG, Cornell University Library, 201 Olin Library Cornell University Ithaca, 12 February 2004) relates to Quantum annealing of the Traveling Salesman Problem (TSP).

### Summary of Invention

One or more of the objects specified above are substantially achieved by methods and systems for robot motion planning in accordance with any one of the appended claims, which alleviate or eliminate one or more of the described disadvantages and which realize one or more of the described advantages.

According to the invention, there is provided a method according to the annexed claim 1.

In a first aspect, there is provided a method for optimizing, based on a weighted graph and an objective function, one or more motions of a robot performing one or more tasks. The weighted graph is denoted as $G:=(V;E;W)$ with vertices $V$, edges $E$, and weights $W$. The method comprises determining a first function $f_{distance}$ indicative of a distance travelled by the robot performing the motion; determining a second function $f_{tasks}$ configured to enforce that each task of the one or more tasks is performed exactly once; determining a third function $f_{time}$ configured to enforce that exactly one task of the one or more tasks is performed at a time; determining the objective function based on the first, second, and third functions; and optimizing the one or more motions of the robot based on the objective function using quantum computing techniques.

In a second aspect according to aspect 1, optimizing the one or more motions of the robot based on the objective function is performed using quantum annealing.

In a third aspect, the first function $f_{distance}$ is determined as

$$f_{\text{distance}} = \sum_{i=1}^{N} \sum_{k=1}^{2} W(\{v_r, v_i^{(k')}\}) x_{i,1}^{(k)}$$

$$+ \sum_{t=1}^{N} \sum_{i,j=1}^{N} \sum_{k,l=1}^{2} W(\{v_i^{(k)}, v_j^{(l)}\}) x_{i,t}^{(k)} x_{j,t+1}^{(l')},$$

where $v_r$ is a vertex $V$ corresponding to the robot, and $\{k, k'\} = \{l, l'\} = \{1,2\}$.

In a fourth aspect, the second function $f_{tasks}$ is determined as

$$f_{\text{tasks}} := \sum_{i=1}^{N} f_{\text{tasks}}^{(i)}.$$

In a fifth aspect, the third function $f_{time}$ is determined as

$$f_{\text{time}} := \sum_{t=1}^{N} f_{\text{time}}^{(t)}.$$

In a sixth aspect according to any one of aspects 1 to 5, the vertices $V$ are configured to represent a starting location of the robot and a start point and an end point of each task of the one or more tasks. Optionally, the vertices $V$ are determined as

$$V := \{v_r\} \cup V^{(1)} \cup V^{(2)}.$$

In a seventh aspect according to any one of aspects 1 to 6, the edges E are configured to represent motion paths that the robot can perform. Optionally, the edges E are determined as

$$E := (\cup_{i=1}^{N} \cup_{k=1}^{2} \{(v_r, v_i^{(k)})\}) \cup (\cup_{i,j=1}^{N} \cup_{k,l=1}^{2} \{(v_i^{(k)}, v_j^{(l)})\}).$$

In an eighth aspect according to any one of aspects 1 to 7, the weights $W$ are configured to represent a cost of a motion traversing an edge $E$. Optionally, the weights $W$ are determined as

$$W : E \to \mathbb{R},$$

$$W(\{v_1, v_2\}) = d(v_1, v_2).$$

In a ninth aspect, the objective function $f$ is determined as

$$f : \{0,1\}^{2N^2} \to \mathbb{R}$$

$$f := f_{\text{distance}} + f_{\text{tasks}} + f_{\text{time}}.$$

In a tenth aspect according to any one of aspects 1 to 9, a task of the one or more tasks includes a 1-dimensional path. Optionally, the 1-dimensional path includes a start point, an end point, and a processing time. Preferably, the processing time is defined as a weight (w), e.g. based on a Euclidean distance (see below).

According to the invention there is further provided a system for optimizing one or more motions of a robot performing one or more tasks, the system including a control unit configured for performing the method in accordance with the present invention, in particular in accordance with any one of aspects 1 to 10.

**Brief Description of Drawings**

The accompanying drawings disclose exemplifying aspects in accordance with embodiments of the present invention. In the drawings, like reference numerals denote the same, similar, or identical components.

Figure 1 shows a simplified illustration of an optimization problem in 2-dimensional space;

Figure 2 shows median success probabilities in accordance with embodiments of the present invention;

Figure 3 illustrates the use of heuristics and AI to reduce the number of logical variables in accordance with embodiments of the present invention; and

Figure 4 shows a flow chart of a method for robot motion planning in accordance with embodiments of the present invention.

**Detailed Description**

Quantum computing technology is widely considered to constitute a promising platform for providing some advantages over classical computing in the coming years for solving certain kinds of difficult optimization problems, such as problems arising in combinatorial optimization. An example of a combinatorial optimization problem is as follows. From a large finite set of possible production plans, the specific subset must be found which optimizes the desired target functions while satisfying predetermined constraints. Due to the high computational effort, exact optimization can often take infeasibly long for large enough problems. In practice, one therefore typically resorts to specialized heuristics which often times have no formal guarantee of returning a global optimum for short run times, but have nevertheless been shown experimentally to find, in a feasible period of time, solutions which are "good enough" for the specific application at hand. One may view quantum annealing as one such heuristic.

The problem investigated is similar to the Traveling Salesman Problem (TSP), which is ubiquitous across many areas of optimization and is one of the most intensely studied problems in optimization. In the following, an informal description of the problem investigated is provided. Suppose there are N 1-dimensional paths. Within the scope of the present disclosure, most of the details of each path may be disregarded as irrelevant, except for the start and end points of each path. Each path corresponds to a task on which a robot, with a given starting location, needs to do some work. There are, of course, several natural extensions of the problem that may be considered for a more realistic treatment of a real-world problem, for example, the generalization to $M \geq 1$ robots. According to the present disclosure, however, the simple case of a single robot is focused on. In the automotive industry, there are numerous robot applications that correspond to the described problem formulation, such as laser welding, seam sealing, measuring, gluing and painting. Informally speaking, the relevant computational problem is the problem of determining in which order the tasks should be done so as to minimize the total length traveled by the robot, thus minimizing the time required to perform the tasks.

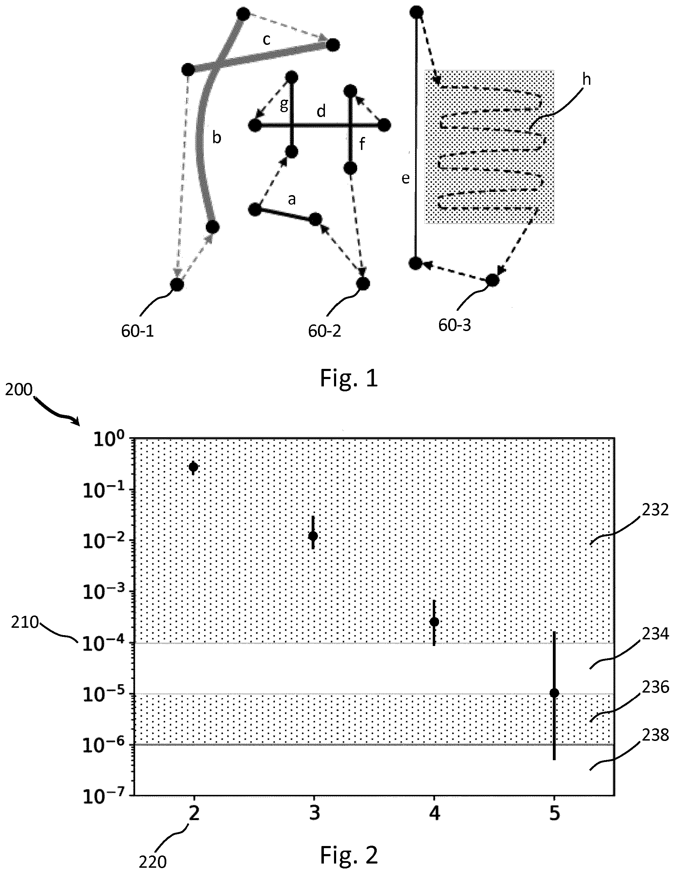

Figure 1 shows a simplified illustration of an optimization problem in 2-dimensional space, which corresponds to a typical assembly line motion of several robots. A typical process requires firstly the distribution of tasks among the robots 60-1, 60-2, 60-3 and secondly scheduling the order of tasks for each robot (e.g. tasks b, c for robot 60-1). As seen in Figure 1 firstly distributing tasks among robots 60-1, 60-2, and 60-33 is an optimization problem, secondly finding an optimal order to complete the allocated tasks is also an optimization problem. For example, Robot 60-1 starts from its initial position, completes task b, followed by task c and ends back at its initial position. Likewise, robot 60-2 starts from its initial position, completes tasks a, g, d, and f, and ends back at its initial position.

Similarly, robot 60-3 starts from its initial position, completes tasks e and h, and ends back at its initial position. In the example of robot 60-3, task h can be regarded as an integrated task. An integrated task can be, for example, a robotic task that requires a specific area to be covered by a process medium, such as painting or sealing medium. In such examples, in order to fulfill task h, robot 60-3 applies the process medium along the dashed meandering path to cover the area filled with dots. Within the scope of the present disclosure, integrated tasks can be included in the optimization with an associated weight that is not only based on the start and end points, but also on the nature of the integrated task, such that the overall weight of the tasks is correctly with respect the weight of generic tasks (e.g. based on start / end points, such as a, b, c, etc.). In the following, the problem underlying the general concepts of the present disclosure is formally and mathematically described.

The problem of interest can be modeled by a weighted graph, which is denoted as $G := (V ; E ; W)$. The vertices correspond to the starting locations of the robot, $v_r$, and the start and end points of each task. Without loss of generality, one in each of those pairs of points can be arbitrarily set to be the starting point, and those $V^{(1)} := \left\{ v_1^{(1)}, \ldots, v_N^{(1)} \right\}$ can be

denoted; similarly, the end points $V^{(2)} := \left\{ v_1^{(2)}, \ldots, v_N^{(2)} \right\}$ can be denoted. The vertices of $G$ are then given as follows:

$$V := \left\{ v_r \right\} \cup V^{(1)} \cup V^{(2)}.$$

The edges of G correspond to the possible paths that the robot can travel. These edges take one of two forms. First, they can be of the form ( $v_r; v_i^{(k)}$ ), where $i \in \{1, \ldots, N\}$, $k \in \{1,2\}$. Edges of this form correspond to paths between the starting location of the robot, and the start- or endpoint of a task. Alternatively, edges can be of the form ( $v_i^{(k)}; v_j^{(l)}$ ). Edges of this form correspond to the paths between either the start- or endpoint of task i, to either the start- or endpoint of task $j$. The union of all such pairs of vertices forms the set of edges of G:

$$E := \left( \cup_{i=1}^{N} \cup_{k=1}^{2} \left\{ (v_r, v_i^{(k)}) \right\} \right) \cup \left( \cup_{i,j=1}^{N} \cup_{k,l=1}^{2} \left\{ (v_i^{(k)}, v_j^{(l)}) \right\} \right).$$

Finally, the weight of each edge will correspond to the "cost" of traversing each edge. In the simplest case, this can correspond to the distance between two vertices. However, one can also imagine incorporating other relevant features into the weight function. For instance, if the robot has to change its mounted tool between a pair of tasks, effectively delaying the time it takes for it to be able to get started processing the second task in this pair, one possible way of modeling this is by increasing the weight of the corresponding edge. Here, however, the simpler case in which the weight of each edge corresponds to its length is focused on:

$$W : E \to \mathbb{R},$$

$$W(\{v_1, v_2\}) = d(v_1, v_2).$$

Now that the graph $G = (V; E; W)$ has been constructed, the QUBO that models the problem can be defined. It is once again noted that, if the goal is to solve the problem on a D-Wave quantum annealer, the objective function must be a quadratic function, i.e., any function of the form $f(x) := x^T Q x$. As described, this can be done naturally in the case of a single robot. Following Lucas, A.: "Ising formulations of many np problems." Frontiers in Physics 2, 5 (2014), it is proceeded as follows.

First, the logical variables x are described. For each $i \in \{1, \ldots, N\}$, $k \in \{1,2\}$, a binary variable $x_{i,t}^{(d)} \in \{0,1\}$ is associated, which encodes whether or not the t-th task to perform should be task $i$ in direction d. Without loss of generality, direction $d$ can be arbitrarily defined to be the direction such that when a robot performs task i, the robot ends at vertex $v_i^{(d)}$. All of these variables are put together in one vector and the binary vector $x \in \{0,1\}^{2N^2}$ is obtained, i.e.:

$$\boldsymbol{x} = \big( x_{1,1}^{(1)}, x_{1,1}^{(2)}, x_{2,1}^{(1)}, x_{2,1}^{(2)}, \ldots, x_{N,1}^{(1)}, x_{N,1}^{(2)},$$

$$x_{1,2}^{(1)}, x_{1,2}^{(2)}, x_{2,2}^{(1)}, x_{2,2}^{(2)}, \ldots, x_{N,2}^{(1)}, x_{N,2}^{(2)},$$

$$\vdots$$

$$x_{1,N}^{(1)}, x_{1,N}^{(2)}, x_{2,N}^{(1)}, x_{2,N}^{(2)}, \ldots, x_{N,N}^{(1)}, x_{N,N}^{(2)} \big).$$

Informally, x encodes the order in which the robot is to perform the tasks.

The objective function can be defined based on the logical variables defined above. Generally, a number of different and/or various optimization objectives are conceivable, for example the optimization of processing time, energy consumption, wear & tear of components, robot lifetime, setup costs, and other. In the present embodiment, an objective function is focused on, which will model the distance travelled by the robot between the tasks (as the cost function that is to be optimized). This is given by

$$
f_{\text{distance}} = \sum_{i=1}^{N} \sum_{k=1}^{2} W(\{v_r, v_i^{(k')}\}) x_{i,1}^{(k)}
$$

$$
+ \sum_{t=1}^{N} \sum_{i,j=1}^{N} \sum_{k,l=1}^{2} W(\{v_i^{(k)}, v_j^{(l)}\}) x_{i,t}^{(k)} x_{j,t+1}^{(l')},
$$

(1)

where $v_r$ is the vertex corresponding to the robot, and $\{k, k'\} = \{l, l'\} = \{1,2\}$. Informally, the first term in Eq. (1) corresponds to the distance the robot travels to its first task, and the second term corresponds to the distance the robot travels between subsequent tasks. Note that from a purely formal point of view, $f_{distance}$ is minimized for $x = 0$, which corresponds to the assignment in which no tasks are performed. Clearly this is not a physically relevant solution. Therefore, in addition to $f_{distance}$, the final objective function needs to include penalty functions which penalize such physically irrelevant assignments. In particular, will be seen below, two penalties are required.

The first penalty enforces the constraint that all tasks be performed exactly once. For each task $i$, this corresponds the equality constraint

$$
\sum_{t=1}^{N} \sum_{d=1}^{2} x_{i,t}^{(d)} = 1.
$$

(2)

A quadratic function which penalizes values of x which don't satisfy this equality is given by

$$
f_{\text{tasks}}^{(i)} := P_i \left( \sum_{t=1}^{N} \sum_{d=1}^{2} x_{i,t}^{(d)} - 1 \right)^2,
$$

(3)

where $P_i \in (0, \infty)$ must be chosen large enough so that the penalty is enforced. While it might be tempting to set $P_i$ to some arbitrarily large number, the limited precision available on current quantum computing hardware must be taken into account. Setting $P_i$ too large may result in the quantum processor not being able to accurately implement the remainder of the problem. Therefore, in practice it is recommended to choose the smallest possible $P_i$ that still effectively enforces these constraints. In testing the concepts of the present disclosure, $P_i$ was set to the following:

$$
P_i = \max_{\substack{j \in \{1,\ldots,N\} \\ l,k \in \{1,2\}}} \max\{W(\{v_j^{(l)}, v_i^{(k)}\}), W(\{v_r, v_i^{(k)}\})\}
$$

$$
+ \max_{\substack{j \in \{1,\ldots,N\} \\ k,l \in \{1,2\}}} W(\{v_i^{(k)}, v_j^{(l)}\}).
$$

(4)

Intuitively, $P_i$ is equal to the sum of the largest distance that can be traveled to task i (first term in the sum) and the largest distance that can be traveled from task i (second term in the sum). Summing over all tasks, the penalty function which enforces that all tasks be performed exactly once is obtained:

$$f_{\text{tasks}} := \sum_{i=1}^{N} f_{\text{tasks}}^{(i)}. \tag{5}$$

It is noted that from a purely formal point of view, the assignment $x_{i,2}^{(1)} = 1$ for all i, and $x_{j,t}^{(d)} = 0$ otherwise minimizes both $f_{distance}$ and $f_{tasks}$. This corresponds to an assignment for which the robot takes care of all tasks simultaneously. Clearly this is not a physically relevant solution, since the robot can do at most one task at a time. This leads us to the second and final penalty function that is required.

The second penalty should enforce the constraint that at each time step, exactly one task be performed. For each time step t, this corresponds to the equality constraint

$$\sum_{i=1}^{N} \sum_{d=1}^{2} x_{i,t}^{(d)} = 1. \tag{6}$$

A quadratic function which penalizes values of x which don't satisfy this equality is given by

$$f_{\text{time}}^{(t)} := P_t \left( \sum_{i=1}^{N} \sum_{d=1}^{2} x_{i,t}^{(d)} - 1 \right)^2, \tag{7}$$

where $P_t \in (0, \infty)$ must be chosen large enough so that the penalty is enforced. In practice, similar considerations must be taken into account when choosing $P_t$ as when choosing $P_i$. In the experiments conducted, $P_t$ was set to the following:

$$P_t = \max_{i \in \{1, \ldots, N\}} P_i. \tag{8}$$

Intuitively, $P_t$ is the largest possible distance that the robot can travel at any time step. This is in turn equal to the sum of the largest distance that can be traveled to any task plus the largest distance that can be traveled from that task. Summing over all time steps, the penalty function which enforces that exactly one task be performed per time step is obtained:

$$f_{\text{time}} := \sum_{t=1}^{N} f_{\text{time}}^{(t)}. \tag{9}$$

Summing together equations (1), (5), and (9), the final objective function is obtained:

$$f : \{0,1\}^{2N^2} \rightarrow \mathbb{R} \tag{10}$$

$$f := f_{\text{distance}} + f_{\text{tasks}} + f_{\text{time}}. \tag{11}$$

Based on the problem formulation above, results of an experimental application of the disclosed concepts are provided below. For each $N \in \{2,3,4,5\}$, 20 instances with N tasks were generated, with the location of the end points of each task chosen at random. It is noted that once the vertices are determined, the edges and the corresponding edge weights are defined according to the formulation described above. In particular, given a set of vertices, a function f of the form in Eq. 11 is obtained. It is this function that is then solved with the D-Wave 2000Q machine, as described by D.W.S., Inc.: "The d-wave 2000q quantum computer technology overview.", D-Wave (2018).

The results of the quantum annealer were compared with those of a classical method. The classic algorithm chosen was the Herd-Karp algorithm (see Held, M., Karp, R.M.: "The traveling-salesman problem and minimum spanning trees.", Operations Research 18(6), 1138-1162 (1970). It is an exact method for solving TSP and has an exponential time complexity of $O(2^n n^2)$.

Table 1: The tasks information for the problem instance with size 5.

| Task | Start | End | Velocity |
|------|-------|-----|----------|
| a | (287, 619) | (17, 479) | 94 |
| b | (595, 627) | (592, 52) | 58 |
| c | (488, 353) | (43, 565) | 68 |
| d | (450, 142) | (688, 580) | 63 |
| e | (136, 403) | (630, 170) | 70 |

Table 1 above lists the start and end positions of each task along with the associated speed. The processing time (i.e. the weight) of a task results from the Euclidean distance between start and end position divided by the velocity. The travel time between two separate tasks is calculated by the corresponding Euclidean distance of the link divided by a default speed of 100. The robot home position (R0) has been set to (0, 0).

Due to limitation on the D-Wave hardware, the problem size for the experiment was chosen to be minimal. The optimal solution of 52.08 s - verified by the Held-Karp algorithm - was also found by the quantum annealer.

The optimal path is: $R0 \to a' \to c' \to d \to b \to e' \to R0$ Here, ' indicates that the task is processed in the reverse direction.

The results supported the hypothesis that quantum computing, and, more specifically, the annealing approach, is a viable alternative for solving optimization problems. Hence, future developments in quantum computer capability increase potential of solving real business challenges.

Figure 2 shows median success probabilities in accordance with embodiments of the present invention. In other words, the results of performance testing are shown in Figure 2, which shows the success probability for any given annealing cycle on the D-Wave quantum annealer versus problem size. Diagram 200 in figure 2 illustrates success probabilities for a single robot (i.e. 1-robot) scenario. The vertical axis 210 denotes the respective median success probability (ranging between $10^{-7}$ and $10^0$) and the horizontal axis denotes the number of tasks (e.g. 2, 3, 4, ...). The ranges 232 to 238 denote different time ranges: range 232 denotes a range of $\leq\approx 5$ seconds, range 234 denotes a range of $\approx 5 - 50$ seconds, range 236 denotes a range of $\approx 50 - 500$ seconds, and range 238 denotes a range of $\geq\approx 500$ seconds.

For small problems with two tasks, the observed median success probability per annealing cycle was $\approx 0:3$. Here, "success" denotes that the annealing cycle returned a configuration that resulted in the optimal solution after repairing every so-called chain, which is a group of qubits corresponding to the same logical variable. For the largest problem sizes investigated, namely 5 tasks, the observed median success probability per annealing cycle was $\approx 10^{-5}$. Also shown in Figure 2 are approximate corresponding wall-clock times for each success probability. These wall-clock times are computed as follows. Each call to the D-Wave quantum annealer is restricted to at most $10^4$ annealing cycles. Furthermore, each call takes $\approx 5$ seconds of wall-clock time to complete. This means that one can obtain an approximate estimate of the wall clock-time $t_{clock}$ corresponding to a success probability p via the equation $t_{clock} = \left\lceil \frac{1/p}{10^4} \right\rceil \times 5$ seconds.

For the range of problem sizes investigated, the median success probability appears to decay exponentially with the number of tasks. It is noted that for such a combinatorial optimization problem, this is the kind of scaling one would expect with any *exact* solver, whether quantum or classical. Relatedly, it is important to note that these results indicate a sort of "worst-case scenario" performance. More concretely, (i) no preprocessing was done on the QUBOs before being submitted to the DW quantum annealer, and (ii) the success probabilities indicate the probability of finding a global optimum. In practice, (i) state-of-the-art techniques will employ heuristics to speed up the computation time, and (ii) typically it is only necessary to find a "good enough" solution, as opposed a global optimum.

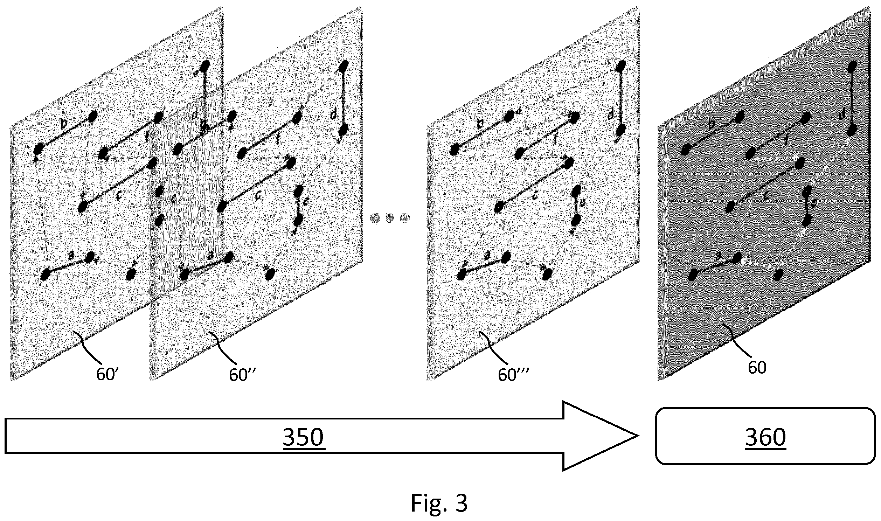

Figure 3 illustrates the use of heuristics and AI to reduce the number of logical variables in accordance with embodiments of the present invention. It must be considered that several heuristic approaches could be used to reduce the M-robot setting to the 1-robot (i.e. single robot) setting, and then, the algorithm developed in detail on each of the derived 1-robot problems could be used. In another embodiment, heuristics could be first applied to create and investigate 350 a population of good solutions and then using AI to identify a common pattern 360 in it. In this way, it is possible to reduce the number of logical variables by considering frequently occurring task pairs as a fixed sequence (see Figure 3). It is anticipated that heuristics would enable addressing larger and overall more complex problems on existing quantum computing technology. Additionally, it is noted that addressing this problem with a universal quantum computer could allow more flexibility with the kinds of models chosen to describe the problem.

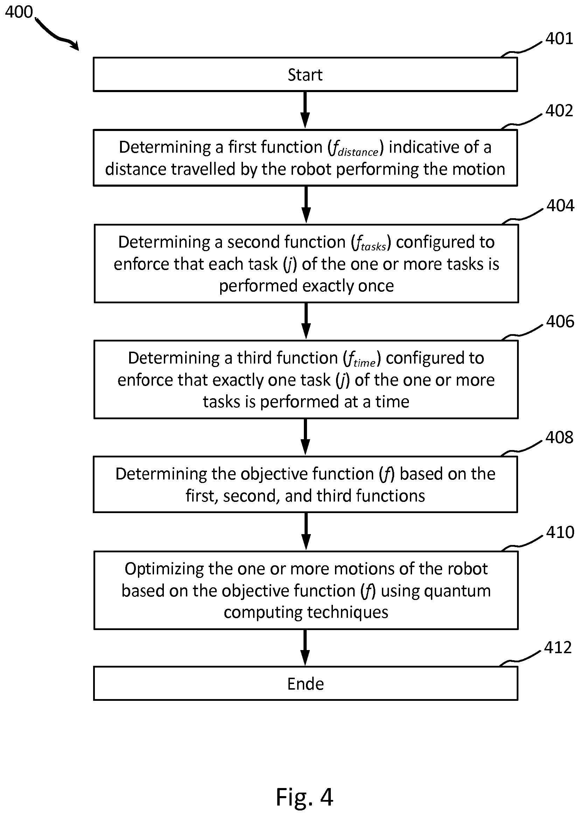

Figure 4 shows a flow chart of a method 400 for robot motion planning in accordance with embodiments of the present invention. The method 400 for optimizing, based on a weighted graph G and an objective function *f*, one or more motions of a robot 60, 60-1, 60-2, 60-3 performing one or more tasks starts at step 401. The weighted graph G is denoted as $G := (V; E; W)$ with vertices *V*, edges *E*, and weights *W*. In step 402, a first function $f_{distance}$ indicative of a distance travelled by the robot performing the motion is determined. In step 404, a second function $f_{tasks}$ is determined. The second function $f_{tasks}$ is configured to enforce that each task *j* of the one or more tasks is performed exactly once. In step 406, a third function $f_{time}$ is determined. The third function $f_{time}$ is configured to enforce that exactly one task *j* of the one or more tasks is performed at a time. In step 408, the objective function f is determined based on the first, second, and third functions. In step 410, the one or more motions of the robot 60, 60-1, 60-2, 60-3 are optimized based on the objective function *f* using quantum computing techniques. The method stops at step 412.

**Claims**

1. Method (400) for optimizing, based on a weighted graph *G* and an objective function *f* being

$$f : \{0,1\}^{2N^2} \to \mathbb{R}$$

$$f := f_{\text{distance}} + f_{\text{tasks}} + f_{\text{time}}.$$

where N is a number of motion paths,
one or more motions of a robot (60, 60-1, 60-2, 60-3) for use in manufacturing performing one or more tasks, wherein the robot (60, 60-1, 60-2, 60-3) starts from a starting location, completes the one or more tasks, and ends back at its starting location, wherein the weighted graph G denoted as $G := (V; E; W)$ is a function of vertices *V* configured to represent a starting location of the robot (60, 60-1, 60-2, 60-3) and a start point and an end point of each task of the one or more tasks, edges E configured to represent motion paths that the robot (60, 60-1, 60-2, 60-3) can perform, and weights W configured to represent a cost of a motion traversing an edge E, the method comprising:

- determining (402) a first function $f_{distance}$ indicative of a distance travelled by the robot performing the motion, wherein said first function is determined as

$$f_{\text{distance}} = \sum_{i=1}^{N} \sum_{k=1}^{2} W(\{v_r, v_i^{(k')}\}) x_{i,1}^{(k)}$$
$$+ \sum_{t=1}^{N} \sum_{i,j=1}^{N} \sum_{k,l=1}^{2} W(\{v_i^{(k)}, v_j^{(l)}\}) x_{i,t}^{(k)} x_{j,t+1}^{(l')},$$

where N is a number of motion paths, where $v_r$ is a vertex *V* corresponding to the robot (60, 60-1, 60-2, 60-3), and $\{k, k'\} = \{l, l'\} = \{1,2\}$, wherein $v_r$ denotes the starting location of the robot, $v_i^{(k)}$; $v_j^{(l)}$ corresponds to the paths between either the start- or endpoint of task i, to either the start- or endpoint of task *j*, x is a binary variable $\in \{0, 1\}$ which encodes the order in which the robot is to perform the tasks, and the first term in the equation corresponds to the distance the robot travels to its first task, and the second term corresponds to the distance the robot travels between subsequent tasks;
- determining (404) a second function $f_{tasks}$ configured to enforce that each task of the one or more tasks is performed exactly once, wherein the second function is determined as

$$f_{\text{tasks}} := \sum_{i=1}^{N} f_{\text{tasks}}^{(i)}.$$

where N is a number of motion paths; and wherein

$$f_{\text{tasks}}^{(i)} := P_i \left( \sum_{t=1}^{N} \sum_{d=1}^{2} x_{i,t}^{(d)} - 1 \right)^2, \tag{3}$$

- determining (406) a third function $f_{time}$ configured to enforce that exactly one task of the one or more tasks is performed at a time, wherein the third function is determined as

$$f_{\text{time}} := \sum_{t=1}^{N} f_{\text{time}}^{(t)}.$$

where N is a number of motion paths; and wherein

$$f_{\text{time}}^{(t)} := P_t \left( \sum_{i=1}^{N} \sum_{d=1}^{2} x_{i,t}^{(d)} - 1 \right)^2, \tag{7}$$

the method further comprising the steps of:

determining (408) the objective function $f$ based on the sum term of the first, second, and third functions wherein the objective function is a quadratic function of $x$ in the form $f := x^T Q x;$ and
optimizing (410) the one or more motions of the robot (60, 60-1, 60-2, 60-3) based on the objective function $f$ using quantum annealing as quantum computing techniques.

2. Method of claim 1, wherein the vertices $V$ are determined as

$$V := \{v_r\} \cup V^{(1)} \cup V^{(2)}.$$

wherein $v_r$ denotes the starting location of the robot, $V^{(1)}$ denotes start points of the tasks, and $V^{(2)}$ denotes points of the tasks.

3. Method of any one of the preceding claims 1 to 2, wherein the edges $E$ are determined as

$$E := \left( \cup_{i=1}^{N} \cup_{k=1}^{2} \left\{ (v_r, v_i^{(k)}) \right\} \right) \cup \left( \cup_{i,j=1}^{N} \cup_{k,l=1}^{2} \left\{ (v_i^{(k)}, v_j^{(l)}) \right\} \right).$$

where N is a number of motion paths, wherein $v_r$ denotes the starting location of the robot, $v_i^{(k)}$; $v_j^{(l)}$ corresponds to the paths between either the start- or endpoint of task $i,$ to either the start- or endpoint of task $j$.

4. Method of any one of the preceding claims 1 to 3, wherein the weights $W$ are determined as

$$W : E \rightarrow \mathbb{R},$$

$$W(\{v_1, v_2\}) = d(v_1, v_2).$$

wherein $d$ *as function of* $v_1$, $v_2$ denotes a length of the edge between $v_1$ and $v_2$.

5. Method of any one of the preceding claims 1 to 4, wherein a task j of the one or more tasks includes a 1-dimensional path; optionally wherein the 1-dimensional path includes the start point $v_N^{(1)}$, the end point $v_N^{(2)}$, and a processing time, the processing time preferably being defined as a weight w, e.g. based on a Euclidean distance and where N is a number of motion paths.

**Patentansprüche**

1.  Verfahren (400) zum Optimieren, basierend auf einem gewichteten Graphen G und einer Zielfunktion f, die dargestellt ist als

$$f : \{0,1\}^{2N^2} \to \mathbb{R}$$

$$f := f_{Entfernung} + f_{Aufgaben} + f_{Zeit},$$

wobei N eine Anzahl von Bewegungspfaden ist,
einer oder mehrerer Bewegungen eines Roboters (60, 60-1, 60-2, 60-3) zur Verwendung bei einer Herstellung, welcher eine oder mehrere Aufgaben durchführt, wobei der Roboter (60, 60-1, 60-2, 60-3) von einem Startort startet, die eine oder die mehreren Aufgaben abschließt und wieder zurück an seinem Startort endet, wobei der gewichtete Graph *G*, bezeichnet als *G: = (V; E; W)*, eine Funktion von Vertices *V*, die zum Repräsentieren eines Startortes des Roboters (60, 60-1, 60-2, 60-3) und eines Startpunktes und eines Endpunktes jeder Aufgabe der einen oder mehreren Aufgaben konfiguriert sind, Kanten *E*, die zum Repräsentieren von Bewegungspfaden konfiguriert sind, die der Roboter (60, 60-1, 60-2, 60-3) durchführen kann, und Gewichtungen *W* ist, die zum Repräsentieren von Kosten einer Bewegung konfiguriert sind, die eine Kante <u>*E*</u> durchläuft, wobei das Verfahren Folgendes umfasst:

- Bestimmen (402) einer ersten Funktion $f_{Entfernung}$, die eine durch den Roboter, der die Bewegung durchführt, zurückgelegte Entfernung angibt, wobei die erste Funktion bestimmt wird als

$$f_{Entfernung} = \sum_{i=1}^{N} \sum_{k=1}^{2} W(\{v_r, v_i^{(k')}\}) x_{i,1}^{(k)} + \sum_{t=1}^{N} \sum_{i,j=1}^{N} \sum_{k,l=1}^{2} W(\{v_i^{(k)}, v_j^{(l)}\}) x_{i,t}^{(k)} x_{j,t+1}^{(l')},$$

wobei N eine Anzahl von Bewegungspfaden ist, wobei $v_r$ ein Vertex *V* ist, der dem Roboter (60, 60-1, 60-2, 60-3) entspricht, und $\{k, k'\} = \{l, l'\} = \{1,2\}$ gilt, wobei $v_r$ den Startort des Roboters bezeichnet, $v_i^{(k)}; v_j^{(l)}$ den Pfaden zwischen entweder dem Start- oder Endpunkt einer Aufgabe *i* und entweder dem Start- oder Endpunkt einer Aufgabe *j* entspricht, x eine binäre Variable $\in \{0, 1\}$ ist, die die Reihenfolge codiert, in der der Roboter die Aufgaben durchführen soll, und der erste Term in der Gleichung de Entfernung entspricht, die der Roboter zu seiner ersten Aufgabe zurücklegt, und der zweite Term der Entfernung entspricht, die der Roboter zwischen folgenden Aufgaben zurücklegt;
- Bestimmen (404) einer zweiten Funktion $f_{Aufgaben}$, die zum Erzwingen davon konfiguriert ist, dass jede Aufgabe der einen oder mehreren Aufgaben genau einmal durchgeführt wird, wobei die zweite Funktion bestimmt wird als

$$f_{Aufgaben} := \sum_{i=1}^{N} f_{Aufgaben}^{(i)},$$

wobei N eine Anzahl von Bewegungspfaden ist; und wobei

$$\mathfrak{f}_{Aufgaben}^{(i)} := P_i \left( \sum_{t=1}^{N} \sum_{d=1}^{2} x_{i,t}^{(d)} - 1 \right)^2 \quad , \quad (3)$$

- Bestimmen (406) einer dritten Funktion $f_{Zeit}$, die zum Erzwingen davon konfiguriert ist, dass genau eine Aufgabe der einen oder mehreren Aufgaben auf einmal durchgeführt wird, wobei die dritte Funktion bestimmt wird als

$$f_{Zeit} := \sum_{t=1}^{N} \mathfrak{f}_{Zeit}^{(t)}.$$

wobei N eine Anzahl von Bewegungspfaden ist; und wobei

$$\mathfrak{f}_{Zeit}^{(t)} := P_t \left( \sum_{i=1}^{N} \sum_{d=1}^{2} x_{i,t}^{(d)} - 1 \right)^2 \quad , \quad (7)$$

wobei das Verfahren ferner die folgenden Schritte umfasst:

Bestimmen (408) der Zielfunktion $f$ basierend auf dem Summenterm der ersten, zweiten und dritten Funktion, wobei die Zielfunktion eine quadratische Funktion von x in der Form von $f := x^T Q x$ ist; und Optimieren (410) der einen oder mehreren Bewegungen des Roboters (60, 60-1, 60-2, 60-3) basierend auf der Zielfunktion f unter Verwendung von Quanten-Annealing als Quanten-Computing-Techniken.

2. Verfahren nach Anspruch 1, wobei die Vertices $V$ bestimmt werden als

$$V := \{v_r\} \cup V^{(1)} \cup V^{(2)},$$

wobei $v_r$ den Startort des Roboter bezeichnet, $V^{(1)}$ Startpunkte der Aufgaben bezeichnet und $V^{(2)}$ Punkte der Aufgaben bezeichnet.

3. Verfahren nach einem der vorhergehenden Ansprüche 1 bis 2, wobei die Kanten E bestimmt werden als

$$E := \left( \bigcup_{i=1}^{N} \bigcup_{k=1}^{2} \{(v_r, v_i^{(k)})\} \right) \cup \left( \bigcup_{i,j=1}^{N} \bigcup_{k,l=1}^{2} \{(v_i^{(k)}, v_j^{(l)})\} \right),$$

wobei N eine Anzahl von Bewegungspfaden ist, wobei $v_r$ den Startort des Roboters bezeichnet, $v_i^{(k)}; v_j^{(l)}$ den Pfaden zwischen entweder dem Start- oder Endpunkt einer Aufgabe $i$ und entweder dem Start- oder Endpunkt einer Aufgabe $j$ entspricht.

4. Verfahren nach einem der vorhergehenden Ansprüche 1 bis 3, wobei die Gewichte $W$ bestimmt werden als

$$W : E \to \mathbb{R},$$

$$W(\{v_1, v_2\}) = d(v_1, v_2).$$

wobei *d als Funktion von v₁, v₂* eine Länge der Kante zwischen $v_1$ und $v_2$ bezeichnet.

5. Verfahren nach einem der vorhergehenden Ansprüche 1 bis 4, wobei eine Aufgab j der einen oder mehreren Aufgaben einen 1-dimensionalen Pfad beinhaltet; wobei optional der 1-dimensionale Pfad den Startpunkt $v_N^{(1)}$, den Endpunkt $v_N^{(2)}$ und eine Verarbeitungszeit beinhaltet, wobei die Verarbeitungszeit bevorzugt als ein Gewicht w definiert ist, z. B. basierend auf einem euklidischen Abstand, und wobei N eine Anzahl von Bewegungspfaden ist.

**Revendications**

1. Procédé (400) d'optimisation, à partir d'un graphe pondéré G et d'une fonction objective *f* qui est

$$f : \{0,1\}^{2N^2} \to \mathbb{R}$$

$$f := f_{distance} + f_{tâches} + f_{temps}.$$

avec N étant un nombre de trajectoires de mouvement,
un ou plusieurs mouvements d'un robot (60, 60-1, 60-2, 60-3) utilisé dans la fabrication pour effectuer une ou plusieurs tâches, le robot (60, 60-1, 60-2, 60-3) partant d'un emplacement de départ, accomplissant la ou les tâches et revenant à son emplacement de départ, le graphe pondéré *G* étant noté *G* : = (*V* ; *E* ; *W*) étant une fonction de sommets *V* configurés pour représenter un emplacement de départ du robot (60, 60-1, 60-2, 60-3) et un point de départ et un point d'arrivée de chaque tâche de la ou des tâches, d'arêtes E configurées pour représenter des trajectoires de mouvement que le robot (60, 60-1, 60-2, 60-3) peut effectuer, et de poids *W* configurés pour représenter un coût d'un mouvement traversant une arête *E*, le procédé comprenant :

- la détermination (402) d'une première fonction $f_{distance}$ indicative d'une distance parcourue par le robot effectuant le mouvement, ladite première fonction étant déterminée comme

$$f_{distance} = \sum_{i=1}^{N}\sum_{k=1}^{2} W(\{v_r, v_i^{(k')}\})x_{i,1}^{(k)}$$

$$+ \sum_{t=1}^{N}\sum_{i,j=1}^{N}\sum_{k,l=1}^{2} W(\{v_i^{(k)}, v_j^{(l)}\})x_{i,t}^{(k)}x_{j,t+1}^{(l')}$$

avec N étant un nombre de trajectoires de mouvement, $v_r$ étant un sommet *V* correspondant au robot (60, 60-1, 60-2, 60-3), et {*k, k'*} = {*l, l'*} = {1,2}, $v_r$ indiquant l'emplacement de départ du robot, $v_i^{(k)}$; $v_j^{(l)}$ correspondant aux trajectoires entre le point de départ ou d'arrivée de la tâche *i*, et le point de départ ou d'arrivée de la tâche *j*, x étant une variable binaire ∈ {0, 1} qui code l'ordre dans lequel le robot doit effectuer les tâches, et le premier terme de l'équation correspondant à la distance parcourue par le robot jusqu'à sa première tâche, et le second terme correspondant à la distance parcourue par le robot entre les tâches suivantes ;
- la détermination (404) d'une deuxième fonction $f_{tâches}$ configurée pour imposer que chaque tâche de la ou des tâches soit exécutée exactement une fois, la deuxième fonction étant déterminée comme

$$f_{tâches} := \sum_{i=1}^{N} f_{tâches}^{(i)}.$$

avec N étant un nombre de trajectoires de mouvement ; et

$$\mathrm{f}_{t\hat{a}ches}^{(i)} := P_i \left( \sum_{t=1}^{N} \sum_{d=1}^{2} x_{i,t}^{(d)} - 1 \right)^2 , \quad (3)$$

- la détermination (406) d'une troisième fonction $f_{temps}$ configurée pour imposer qu'une seule tâche parmi une ou plusieurs tâches soit exécutée à la fois, la troisième fonction étant déterminée comme

$$f_{temps} := \sum_{t=1}^{N} \mathrm{f}_{temps}^{(t)} .$$

avec N étant un nombre de trajectoires de mouvement ; et

$$\mathrm{f}_{temps}^{(t)} := P_t \left( \sum_{i=1}^{N} \sum_{d=1}^{2} x_{i,t}^{(d)} - 1 \right)^2 , \quad (7)$$

le procédé comprenant en outre des étapes de :

détermination (408) de la fonction objective f basée sur le terme de la somme des première, deuxième et troisième fonctions, la fonction objective étant une fonction quadratique de x sous la forme $f := x^T Q x$ ; et
l'optimisation (410) du ou des mouvements du robot (60, 60-1, 60-2, 60-3) sur la base de la fonction objective $f$ en utilisant le recuit quantique comme technique de calcul quantique.

2. Procédé selon la revendication 1, les sommets $V$ étant déterminés comme

$$V := \{v_r\} \cup V^{(1)} \cup V^{(2)} .$$

avec $v_r$ représentant l'emplacement de départ du robot, $V^{(1)}$ représentant les points de départ des tâches, et $V^{(2)}$ représentant les points des tâches.

3. Procédé selon l'une quelconque des revendications précédentes 1 et 2, les arêtes E étant déterminées comme

$$E := (\cup_{i=1}^{N} \cup_{k=1}^{2} \{(v_r, v_i^{(k)})\}) \cup (\cup_{i,j=1}^{N} \cup_{k,l=1}^{2} \{(v_i^{(k)}, v_j^{(l)})\}) ,$$

avec N étant un nombre de trajectoires de mouvement, $v_r$ représentant l'emplacement de départ du robot, $v_i^{(k)}$ ; $v_j^{(l)}$ correspondant aux trajectoires entre le point de départ ou d'arrivée de la tâche $i$ et le point de départ ou d'arrivée de la tâche $j$.

4. Procédé selon l'une quelconque des revendications précédentes 1 à 3, les poids W étant déterminés comme

$$W : E \to \mathbb{R},$$

$$W(\{v_1, v_2\}) = d(v_1, v_2).$$

avec d *en fonction* de $v_1$, $v_2$ représentant la longueur de l'arête entre $v_1$ et $v_2$.

**5.** Procédé selon l'une quelconque des revendications précédentes 1 à 4, une tâche j de la ou des tâches comprenant une trajectoire à 1 dimension ; éventuellement la trajectoire à 1 dimension comprenant le point de départ $v_N^{(1)}$, le point d'arrivée $v_N^{(2)}$, et un temps de traitement, le temps de traitement étant de préférence défini comme un poids w, par exemple sur la base d'une distance euclidienne, et N étant un nombre de trajectoires de mouvement.

Fig. 1

Fig. 2

Fig. 3

400

401
Start

402
Determining a first function ($f_{distance}$) indicative of a distance travelled by the robot performing the motion

404
Determining a second function ($f_{tasks}$) configured to enforce that each task ($j$) of the one or more tasks is performed exactly once

406
Determining a third function ($f_{time}$) configured to enforce that exactly one task ($j$) of the one or more tasks is performed at a time

408
Determining the objective function ($f$) based on the first, second, and third functions

410
Optimizing the one or more motions of the robot based on the objective function ($f$) using quantum computing techniques

412
Ende

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VICENCIO KEVIN et al.** *2014 IEEE/RSJ International Conference on Intelligent Robots and Systems (IROS 2014)*, 14 September 2014, 2985-2990
- **ROMAN MARTONAK et al.** ARXIV.ORG. Cornell University Library, 201 Olin Library Cornell University Ithaca, 12 February 2004

- **LUCAS, A**. Ising formulations of many np problems. *Frontiers in Physics*, 2014, vol. 2 (5)
- **D-WAVE**. The d-wave 2000q quantum computer technology overview. D.W.S., Inc, 2018
- **HELD, M** ; **KARP, R.M.** The traveling-salesman problem and minimum spanning trees. *Operations Research*, 1970, vol. 18 (6), 1138-1162